(19) Europäisches Patentamt
European Patent Office
Office européen des brevets

(11) **EP 1 997 862 B1**

(12) **EUROPEAN PATENT SPECIFICATION**

(45) Date of publication and mention
of the grant of the patent:
**20.10.2010 Bulletin 2010/42**

(51) Int Cl.:
***C09J 133/00*** (2006.01)

(21) Application number: **08157196.0**

(22) Date of filing: **29.05.2008**

(54) **Thermally conductive adhesive composition and adhesion method**

Wärmeleitende Klebezusammensetzung und Klebverfahren

Composition adhésive thermoconductrice et procédé d'adhésion

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **30.05.2007 JP 2007143523**

(43) Date of publication of application:
**03.12.2008 Bulletin 2008/49**

(73) Proprietor: **POLYMATECH CO., LTD.
Tokyo 103-8424 (JP)**

(72) Inventors:
• **Ishigaki, Tsukasa
c/o POLYMATECH CO.
Tokyo 114-0014 (JP)**

• **Nakanishi, Yutaka**

**c/o POLYMATECH CO.
Tokyo 114-0014 (JP)**
• **Aoki, Hisashi
c/o POLYMATECH CO.
Tokyo 114-0014 (JP)**

(74) Representative: **Neuefeind, Regina
Maiwald Patentanwalts GmbH
Elisenhof
Elisenstrasse 3
80335 München (DE)**

(56) References cited:
**EP-A- 0 348 349     EP-A- 1 698 664**

## Description

The present invention relates to a thermally conductive adhesive composition and an adhesion method which are used to diffuse to the outside heat generated from various electronic components that are, for example, heating elements.

Most of various electronic components used for electrical apparatuses generate heat during its use. In order to allow electronic components to function properly, heat generated from electronic components needs to be removed from the electronic components. Therefore, heat radiating members such as a heat sink are mounted on electronic components, if necessary, using thermally conductive materials such as a thermally conductive adhesive composition.

As a thermally conductive adhesive composition, there has been conventionally known one containing a binder comprising an epoxy resin, (meth)acrylic monomer or (meth)acrylic oligomer, and a thermally conductive filler. Further, Japanese Laid-Open Patent Publication Nos. 9-132761, 9-132760, 9-53051, 6-80937 and 5-125331 disclose an acrylic adhesive composition which is used for applications other than thermal conduction and exhibits good curability and adhesiveness by containing a vanadium compound therein.

Thermally conductive adhesive composition containing an epoxy resin as a binder has good adhesive strength. However, there is a problem that this thermally conductive adhesive composition is difficult to be handled depending on the cases, for example, a case where the composition needs to be heated for adhesion, and a case where it requires a long time for curing the composition.

A thermally conductive adhesive composition containing a (meth)acrylic monomer or a (meth)acrylic oligomer as a binder can be adhered in a comparatively short time even under normal temperature (for example, 20 to 25°C) and has excellent workability. However, in order to improve thermal conductivity of the thermally conductive adhesive composition, for example, when the content of a thermally conductive filler is increased in a thermally conductive adhesive composition, there arises a problem that the thermally conductive filler inhibits curing of the thermally conductive adhesive composition and thereby curability of the composition becomes poor, or that viscosity of the thermally conductive adhesive composition is increased and thereby workability of the composition deteriorates. Means for solving the problem of worsening of workability caused by the increase in viscosity of a thermally conductive adhesive composition includes, for example, a method in which viscosity of a (meth)acrylic monomer or a (meth)acrylic oligomer of a binder is lowered to thereby reduce viscosity of a thermally conductive adhesive composition. However, in this case, particles of the thermally conductive filler are agglomerated with each other and the filler was precipitated in a thermally conductive adhesive composition which is allowed to stand, or a (meth)acrylic monomer or a (meth)acrylic oligomer is separated from other components. Therefore, a thermally conductive adhesive composition needs to be sufficiently stirred before its use, and thus there is a problem of worsening workability of the composition.

An objective of the present invention is to provide a thermally conductive adhesive composition and an adhesion method which can be more suitably used in application of thermal conduction from a heating element.

To achieve the foregoing objective and in accordance with a first aspect of the present invention, a thermally conductive adhesive composition including: (A) a polymerizable (meth)acrylic compound comprising at least one of a (meth)acrylic monomer and a (meth)acrylic oligomer; (B) an organic peroxide; (C) a thermally conductive filler; and (D) a vanadium compound is provided. The volume ratio $\alpha$ of the polymerizable (meth)acrylic compound (A) to the thermally conductive filler (C) determined by the following formula (1) is 0.40 to 0.65.

$$\text{Volume ratio } \alpha = \text{Volume of Thermally conductive filler (C)/(Volume of}$$

$$\text{Polymerizable (meth)acrylic compound (A)} + \text{Volume of Thermally conductive filler}$$

$$\text{(C)) ... (1)}$$

40 to 100% by mass of the thermally conductive filler (C) is subjected to hydrophobic surface treatment.

In accordance with a second aspect of the present invention, a method for adhering a first adherend and a second adherend to each other using a thermally conductive adhesive composition is provided. The thermally conductive adhesive composition includes: (A) a polymerizable (meth)acrylic compound comprising at least one of a (meth)acrylic monomer and a (meth)acrylic oligomer; (B) an organic peroxide; (C) a thermally conductive filler; and (D) a vanadium compound is provided. The volume ratio $\alpha$ of the polymerizable (meth)acrylic compound (A) to the thermally conductive filler (C) determined by the following formula (1) is 0.40 to 0.65.

$$\text{Volume ratio } \alpha = \text{Volume of Thermally conductive filler (C)/(Volume of Polymerizable (meth)acrylic compound (A) + Volume of Thermally conductive filler (C)) ... (1)}$$

40 to 100% by mass of the thermally conductive filler (C) is subjected to hydrophobic surface treatment. The thermally conductive adhesive composition further contains (E) a condensate of an aldehyde and an amine, and the composition comprises: a base resin containing the polymerizable (meth)acrylic compound (A), the organic peroxide (B), and the thermally conductive filler (C); and a primer containing the vanadium compound (D) and the condensate of an aldehyde and an amine (E). The method includes: applying the base resin to the first adherend; applying the primer to the second adherend; and joining the first adherend and the second adherend to each other so that the base resin and the primer contact each other on the joined interface to thereby adhere the first adherend and the second adherend to each other.

In accordance with a third aspect of the present invention, a method for adhering a first adherend and a second adherend to each other using a thermally conductive adhesive composition is provided. The thermally conductive adhesive composition includes: (A) a polymerizable (meth)acrylic compound comprising at least one of a (meth)acrylic monomer and a (meth)acrylic oligomer; (B) an organic peroxide; (C) a thermally conductive filler; and (D) a vanadium compound is provided. The volume ratio $\alpha$ of the polymerizable (meth)acrylic compound (A) to the thermally conductive filler (C) determined by the following formula (1) is 0.40 to 0.65.

$$\text{Volume ratio } \alpha = \text{Volume of Thermally conductive filler (C)/(Volume of Polymerizable (meth)acrylic compound (A) + Volume of Thermally conductive filler (C)) ... (1)}$$

40 to 100% by mass of the thermally conductive filler (C) is subjected to hydrophobic surface treatment. The thermally conductive adhesive composition comprises a first agent and a second agent. Both of the first agent and the second agent each contain the polymerizable (meth)acrylic compound (A), and only one of the first agent and the second agent further contains the organic peroxide (B), and only the other of the first agent and the second agent contains the vanadium compound (D). The method includes: mixing the first agent and the second agent; applying the mixture of the first agent and the second agent to at least one of the first adherend and the second adherend; and joining the first adherend and the second adherend to each other so that the mixture of the first agent and the second agent is present on the joined interface to thereby adhere the first adherend and the second adherend to each other.

The invention, together with objects and advantages thereof, may best be understood by reference to the following description of the presently preferred embodiments together with the accompanying drawings in which:

Figs. 1A and 1B are schematic views showing a step of adhesion between an electronic component and a heat sink according to a first embodiment;
Figs. 1C and 1D are schematic views showing a step of adhesion between an electronic component and a heat sink according to a second embodiment; and
Fig. 2 is a schematic view showing a thermal resistance measuring device.

(First Embodiment)

Hereinafter, a thermally conductive adhesive composition according to a first embodiment of the present invention will be specifically described. In the following description, the term "thermally conductive adhesive composition" is only referred to as "adhesive". An adhesive according to the present embodiment contains the following components:

(A) a polymerizable (meth)acrylic compound comprising at least one of a (meth)acrylic monomer and a (meth)acrylic oligomer;
(B) an organic peroxide;
(C) a thermally conductive filler;
(D) a vanadium compound; and
(E) a condensate of an aldehyde and an amine.

3

The adhesive according to the present embodiment comprises a base resin containing the polymerizable (meth) acrylic compound (A), the organic peroxide (B) and the thermally conductive filler (C), and a primer (curing accelerator) containing the vanadium compound (D) and the condensate of an aldehyde and an amine (E). The adhesive is used for adhesion between a first adherend and a second adherend, for example, adhesion between an electronic component as a heating element and a heat sink as a heat radiating member.

The polymerizable (meth)acrylic compound (A) comprising at least one of a (meth)acrylic monomer and a (meth)acrylic oligomer acts as a solvent of the organic peroxide (B), or as a dispersion medium of the thermally conductive filler (C) before using an adhesive. Further, when the adhesive is used, the polymerizable (meth)acrylic compound (A) cures the adhesive due to the polymerization, and thereby, for example, an electronic component and a heat sink are adhered to each other. In the present application, the term "acrylic and methacryl" is collectively referred to as "(meth) acrylic". Examples of the polymerizable (meth)acrylic compound (A) include (meth)acrylic acid, a (meth)acrylic acid alkyl ester, a (meth)acrylic acid hydroxyl alkyl ester, an acetoxyalkyl (meth)acrylate, polyethylene glycol (meth)acrylate, propylene glycol (meth)acrylate, phenoxyethyl (meth)acrylate, cyclohexyl (meth)acrylate, tetrahydrofurfuryl (meth)acrylate, poly(meth)acrylate of polyalcohol, epoxy (meth)acrylate, urethane (meth)acrylate, polyester (meth)acrylate, and amide (meth)acrylate. As the polymerizable (meth)acrylic compound (A), only one of these specific examples may be used, or two or more thereof may be used in combination. The molecular weight of the polymerizable (meth)acrylic compound (A) is not particularly limited.

The organic peroxide (B) polymerizes the polymerizable (meth)acrylic compound (A) by a radical generated due to the decomposition. Examples of the organic peroxide (B) include cumene hydroperoxide, diisopropylbenzene hydroperoxide, diisopropylbenzene dihydroperoxide, t-butyl hydroperoxide, benzoyl peroxide, bis(1-hydroxycyclohexyl peroxide), and ketone peroxide. As the organic peroxide (B), only one of these specific examples may be used, or two or more thereof may be used in combination. Among these specific examples, each of the above-mentioned hydroperoxides is preferred and cumene hydroperoxide is more preferred because of high storage stability.

The content of the organic peroxide (B) in the adhesive is preferably 5 to 10 parts by mass based on 100 parts by mass of the polymerizable (meth)acrylic compound (A). When the content of the organic peroxide (B) is less than 5 parts by mass, polymerization efficiency of the polymerizable (meth)acrylic compound (A) is reduced and thus it may take a long time for adhesion. Even when the content of the organic peroxide (B) exceeds 10 parts by mass, the time required for adhesion cannot be further shortened, and physical properties of the adhesive, for example, stability of the adhesive may be worsened due to the organic peroxide (B) excessively contained.

When the adhesive is used, for example, for adhesion between an electronic component and a heat sink, the thermally conductive filler (C) transfers heat generated from the electronic component to the heat sink. A material of the thermally conductive filler (C) is not particularly limited, but as the material, zinc oxide, aluminum oxide, titanium oxide, magnesium oxide, silicon oxide, aluminum hydroxide, magnesium hydroxide, aluminum nitride, boron nitride, silicon nitride, silicon carbide, diamond, aluminum, silver, copper, and graphite are preferred because of exhibiting excellent thermal conductivity. As the thermally conductive filler (C), only one kind formed from the same material may be used, or two or more kinds formed from each of different materials may be used in combination. When electrical insulating properties are required for the adhesive, the thermally conductive filler (C) is usually formed from a material having electrical insulating properties.

A form of the thermally conductive filler (C) is not particularly limited, and the form includes, for example, a particulate form. The thermally conductive filler (C) having a particulate form preferably has an average particle size of 0.2 to 10 $\mu$m. When the thermally conductive filler (C) has an average particle size of less than 0.2 $\mu$m, filling properties of the thermally conductive filler (C) into the adhesive deteriorates, and thus it becomes difficult to increase the content of the thermally conductive filler (C) in the adhesive. For example, when the adhesive is used for adhesion between an electronic component and a heat sink, it is cured in a compressed state between the electronic component and the heat sink. After curing of the adhesive, an adhesive layer comprising the adhesive is formed between the electronic component and the heat sink. The shorter the distance between the electronic component and the heat sink, that is, the thinner the adhesive layer, the lower the thermal resistance of the adhesive layer, so that thermal conductivity of the adhesive layer is improved. When the thermally conductive filler (C) has an average particle size exceeding 10 $\mu$m, the adhesive cannot be sufficiently compressed during adhesion, an adhesive layer is thickly formed and thus thermal conductivity of the adhesive layer may be reduced. As the thermally conductive filler (C), only one of thermally conductive filler having the same average particle size may be used, or two or more of thermally conductive fillers having different average particle size may be used in combination. In addition, the particle size distribution of the thermally conductive filler (C) is not particularly limited.

The volume ratio $\alpha$ of the polymerizable (meth)acrylic compound (A) to the thermally conductive filler (C) determined by the following formula (1) is 0.40 to 0.65. When the volume ratio $\alpha$ is less than 0.40, the content of the thermally conductive filler (C) in the adhesive is excessively low, and therefore the adhesive cannot exhibit thermal conductivity required for the adhesive used for application of thermal conduction from a heat element. When the volume ratio $\alpha$ exceeds 0.65, viscosity of the adhesive excessively increases and workability of the adhesive deteriorates, and thus the adhesive cannot be used.

$$\text{Volume ratio } \alpha = \text{Volume of Thermally conductive filler (C)/(Volume of Polymerizable (meth)acrylic compound (A) + Volume of Thermally conductive filler (C)) ... (1)}$$

40 to 100% by mass of the thermally conductive filler (C) is subjected to hydrophobic surface treatment. When a ratio of the thermally conductive filler subjected to hydrophobic surface treatment is less than 40% by mass, compatibility between the polymerizable (meth)acrylic compound (A) and the thermally conductive filler (C) is poor, and thus dispersion stability of the thermally conductive filler (C) is reduced. As a result, when the adhesive is allowed to stand, particles of the thermally conductive filler (C) are agglomerated with each other and the filler was precipitated. The hydrophobic surface treatment includes, for example, surface treatment by stearic acid, a titanate coupling agent, or a silane coupling agent. Among these treatments, surface treatment by stearic acid or a titanate coupling agent is preferred because it has a high effect of allowing the polymerizable (meth)acrylic compound (A) to be compatible with the thermally conductive filler (C). The surface treatment of the thermally conductive filler (C) by stearic acid or a titanate coupling agent is performed by mixing the thermally conductive filler (C) with stearic acid or a titanate coupling agent by a mixing machine such as a planetary mixer, and then drying the thermally conductive filler (C).

The vanadium compound (D) is reacted with the organic peroxide (B) to decompose the organic peroxide (B), thereby generating a radical. Examples of the vanadium compound (D) include vanadium acetylacetonate, vanadyl acetylacetonate, vanadyl stearate, vanadium naphthenate, vanadium benzoyl acetonate, and vanadyl oxalate.

The content of the vanadium compound (D) in the adhesive depends on reactivity of the vanadium compound (D) with the organic peroxide (B), and for example, when vanadium acetylacetate having high reactivity with the organic peroxide (B) is used as the vanadium compound (D), the content is 1 to 5 parts by mass based on 5 parts by mass of the organic peroxide (B).

The condensate of an aldehyde and an amine (E) is a liquid having non-volatility at normal temperature, and acts as a solvent of the vanadium compound (D) before using an adhesive. Further, when the adhesive is used, the condensate of an aldehyde and an amine (E) does not adversely affect polymerization of the polymerizable (meth)acrylic compound (A). The term "normal temperature" refers to as "temperature when the adhesive is usually used", for example, 20 to 25°C. Examples of the condensate of an aldehyde and an amine (E) include a condensate of butyraldehyde and aniline, a condensate of butyraldehyde and n-butylamine, and a condensate of heptaldehyde and aniline.

When the content of the condensate of an aldehyde and an amine (E) in the adhesive is preferably 50 to 200 parts by mass based on 5 parts by mass of the vanadium compound (D). When the content of the condensate of an aldehyde and an amine (E) is less than 50 parts by mass, the vanadium compound (D) cannot be sufficiently dissolved, or viscosity of a primer is increased and application of the primer may become difficult. When the content of the condensate of an aldehyde and an amine (E) exceeds 200 parts by mass, curing of the adhesive may be delayed or adhesive force of the adhesive may be lowered due to the excessive condensate of an aldehyde and an amine (E).

The adhesive may contain components other than each of the above-mentioned components, if necessary. Examples of the components other than each of the above-mentioned components include liquid rubber, a polymerization inhibitor, an antioxidant, a corrosion inhibitor, an ultraviolet absorber, a rust preventive, a viscosity modifier, a viscosity increasing agent, a curing accelerator, a curing accelerator auxiliary, a thixotropy imparting agent, a pigment, a dye, an antifoaming agent, a plasticizer, and solvents other than the condensate of an aldehyde and an amine (E). The adhesive is produced through a step of preparing each of the above-mentioned components and a step of properly mixing each of the components to separately prepare a base resin and a primer.

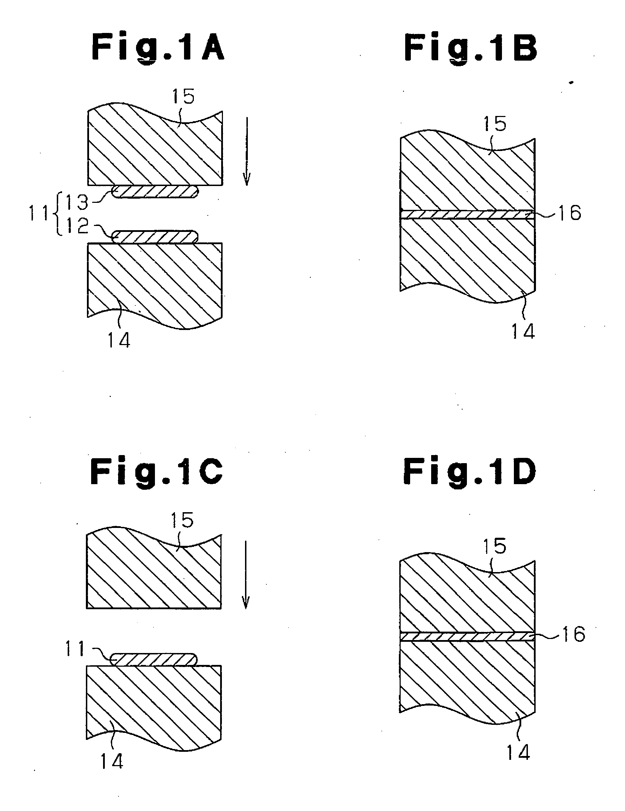

In adhesion between for example, an electronic component as a first adherend and for example, a heat sink as a second adherend using the adhesive, the electronic component and the heat sink are adhered to each other through a step of applying a base resin to the electronic component, a step of applying a primer to the heat sink and a step of adhering the electronic component and the heat sink to each other. In the step of adhering the electronic component and the heat sink to each other, as shown by an arrow in Fig. 1A, an electronic component 14 and a heat sink 15 are joined to each other so that a base resin 12 and a primer 13 contact each other on the joined interface. When the electronic component 14 and the heat sink 15 are joined to each other, a predetermined load is applied to, for example, the heat sink 15 to sufficiently bring the base resin 12 into contact with the primer 13, and thereby an adhesive 11 located between the electronic component 14 and the heat sink 15 is compressed.

When the base resin 12 and the primer 13 contact each other, the liquid base resin 12 and the primer 13 are mixed with each other, and thereby the organic peroxide (B) in the base resin 12 is reacted with the vanadium compound (D) in the primer 13 to decompose the organic peroxide (B), thereby generating a radical. The polymerizable (meth)acrylic compound (A) is polymerized by this radical, and as shown in Fig. 1B, the adhesive is cured to form an adhesive layer 16. Then, the electronic component 14 and the heat sink 15 are adhered to each other through the adhesive layer 16.

The above-mentioned embodiment has the following advantages.

The adhesive 11 according to the present embodiment contains a polymerizable (meth)acrylic compound (A), an organic peroxide (B), a thermally conductive filler (C), and a vanadium compound (D). Further, the volume ratio $\alpha$ of the polymerizable (meth)acrylic compound (A) to the thermally conductive filler (C) determined by the above-mentioned formula (1) is set to 0.40 to 0.65, and 40 to 100% by mass of the thermally conductive filler (C) is subjected to hydrophobic surface treatment.

Generally, as the content of the thermally conductive filler (C) in an adhesive is increased, curing of the adhesive is delayed due to the thermally conductive filler (C). In contrast, in the present embodiment, the organic peroxide (B) is rapidly decomposed by the vanadium compound (D) to thereby generate a radical, and polymerization of the polymerizable (meth)acrylic compound (A) is accelerated to thereby prevent the delay of curing of the adhesive 11. Further, the thermally conductive filler (C) is subjected to hydrophobic surface treatment, and thereby the polymerizable (meth)acrylic compound (A) and the thermally conductive filler (C) are made to be well compatible with each other, so that dispersion stability of the thermally conductive filler (C) is improved. Therefore, in the adhesive 11 according to the present embodiment, even when the thermally conductive filler (C) is contained at a high ratio in the adhesive 11 so that the volume ratio $\alpha$ is 0.40 to 0.65, workability of the adhesive 11 is improved and the adhesive 11 is rapidly cured at normal temperature. As a result, the time required for adhesion is shortened, and simultaneously the apparatus required for adhesion is simplified.

The primer 13 according to the present embodiment contains a condensate of an aldehyde and an amine (E) acting as a solvent of the vanadium compound (D), and the condensate of an aldehyde and an amine (E) has non-volatility at normal temperature. Therefore, when the primer 13 is applied to, for example, the heat sink 15, a solvent of the vanadium compound (D) volatizes at normal temperature to thereby prevent solidification of the primer 13. Further, when the electronic component 14 and the heat sink 15 are joined to each other, it is not difficult to mix the base resin 12 and the primer 13 with each other, the electronic component 14 and the heat sink 15 are easily closely adhered to each other.

The adhesive 11 according to the present embodiment comprises a base resin 12 and a primer 13. For example, the base resin 12 is applied to the electronic component 14 and the primer 13 is applied to the heat sink 15. The polymerizable (meth)acrylic compound (A) in the base resin 12 is not polymerized until the base resin 12 and the primer 13 contact each other. Therefore, in the present embodiment, there hardly arises a pot life problem and the base resin 12 and the primer 13 do not need to be previously mixed with each other before use of the adhesive 11, and therefore workability of the adhesive 11 is improved. Particularly, the adhesive 11 according to the present embodiment is useful for adhesion of a large amount of adherend.

(Second Embodiment)

Next, an adhesive 11 according to a second embodiment of the present invention will be specifically described. In the second embodiment, description of the same components, functions and effects as those in the first embodiment are omitted in order to avoid overlap. The adhesive 11 according to the present embodiment contains each of the following components:

(A) a polymerizable (meth)acrylic compound comprising at least one of a (meth)acrylic monomer and a (meth)acrylic oligomer;
(B) an organic peroxide;
(C) a thermally conductive filler; and
(D) a vanadium compound,

and the adhesive comprises a first agent and a second agent.

Both the first agent and the second agent each contain the polymerizable (meth)acrylic compound (A). Further, only one of the first agent and the second agent contains the organic peroxide (B), and only the other of the first agent and the second agent contains the vanadium compound (D). The thermally conductive filler (C) may be contained in only one of the first agent and the second agent, or both of the first agent and the second agent.

The polymerizable (meth)acrylic compound (A) acts as a solvent of the organic peroxide (B) or the vanadium compound (D), or as a dispersion medium of the thermally conductive filler (C) before using an adhesive 11. Further, when the adhesive 11 is used, the polymerizable (meth)acrylic compound (A) cures the adhesive 11 due to the polymerization, and thereby, for example, an electronic component 14 and a heat sink 15 are adhered to each other. The adhesive 11 is produced through a step of preparing each of the above-mentioned components and a step of properly mixing each of the components to separately prepare a first agent and a second agent.

In adhesion between for example, the electronic component 14 as a first adherend and for example, the heat sink 15 as a second adherend using the adhesive 11, the electronic component 14 and the heat sink 15 are adhered to each other through the following steps. That is, the electronic component 14 and the heat sink 15 are adhered to each other through a step of mixing a first agent and a second agent to prepare an adhesive 11, a step of applying the mixture of the first agent and second agent, that is, the adhesive 11 to only the electronic component 14, for example, and a step of adhering the electronic component 14 and the heat sink 15 to each other. In the step of adhering the electronic component 14 and the heat sink 15 to each other, as shown by an arrow in Fig. 1C, the electronic component 14 and the heat sink 15 are joined to each other so that the adhesive 11 is present on the joined interface. When the electronic component 14 and the heat sink 15 are joined to each other, a predetermined load is applied to, for example, the heat sink 15 in order to make the adhesive 11 present uniformly over the entire joined interface, and thereby the adhesive 11 located between the electronic component 14 and the heat sink 15 is compressed.

The organic peroxide (B) is reacted with the vanadium compound (D) in the adhesive 11 to decompose the organic peroxide (B), thereby generating a radical. The polymerizable (meth)acrylic compound (A) is polymerized by this radical, and as shown in Fig. 1D, the adhesive is cured to form an adhesive layer 16. Then, the electronic component 14 and the heat sink 15 are adhered to each other through the adhesive layer 16.

The above-mentioned embodiment has the following advantages.

The adhesive 11 according to the present embodiment comprises a first agent and a second agent. After the first agent and the second agent are previously mixed with each other before use of the adhesive 11, the mixture is applied to only, for example, the electronic component 14. Therefore, in the present embodiment, adhesion can be performed by one application of the adhesive 11 and workability of the adhesive 11 is improved. The present embodiment is suitable for adhesion of a small amount of adherend unlike the first embodiment.

The adhesive 11 according to the present embodiment does not contain the condensate of an aldehyde and an amine (E) according to the first embodiment, and therefore the composition of the adhesive 11 is simplified as compared with the first embodiment.

It should be apparent to those skilled in the art that the present invention may be embodied in many other specific forms without departing from the spirit or scope of the invention. Particularly, it should be understood that the invention may be embodied in the following forms.

In each embodiment, a heat element other than the electronic component 14 may be used as a first adherend and a heat radiating member other than the heat sink 15, for example, a housing of an electrical apparatus may be used as a second adherend.

In the first embodiment, the base resin 12 may be applied to the heat sink 15 and the primer 13 may be applied to the electronic component 14.

In the second embodiment, the mixture of the first agent and second agent may be applied to, for example, only the heat sink 15 or both of the electronic component 14 and the heat sink 15.

In the second embodiment, for example, the first agent may be applied to the electronic component 14 and the second agent may be applied to the heat sink 15 without mixing the first agent with the second agent, and then the electronic component 14 and the heat sink 15 may be adhered to each other by joining them. In this case, for example, the first agent contains 100 parts by mass of 2-hydroxyethyl methacrylate as the polymerizable (meth)acrylic compound (A), 5 parts by mass of the vanadium compound (D), and 200 parts by mass of acetone, and the second agent contains the polymerizable (meth)acrylic compound (A), the organic peroxide (B) and the thermally conductive filler (C). 2-Hydroxyethyl methacrylate is a (meth)acrylic monomer, and has low viscosity as compared with, for example, polycarbonate-based urethane acrylate as the polymerizable (meth)acrylic compound (A). Therefore, the electronic component 14 and the heat sink 15 can be adhered to each other using this first agent similarly to the primer of the first embodiment.

Next, the above-mentioned embodiments will be more specifically described by way of examples and comparative examples, but the present invention is not intended to be limited to these examples.

(Example 1)

An adhesive corresponding to the first embodiment was prepared in Example 1. That is, polycarbonate-based urethane acrylate and 2-hydroxyethyl methacrylate as a polymerizable (meth)acrylic compound (A), cumene hydroperoxide as an organic peroxide (B), and particles of aluminum hydroxide as a thermally conductive filler (C) were charged into a planetary mixer, and the mixture was stirred at 20°C for one hour to prepare a base resin. The charge ratio of each component is shown in Table 1. The particles of aluminum hydroxide had an average particle size of 3 μm, and 100% by mass of particles of aluminum hydroxide, that is, all particles were subjected to hydrophobic surface treatment by a titanate coupling agent. The volume ratio $\alpha$ of the polymerizable (meth)acrylic compound (A) to the thermally conductive filler (C) determined by the above-mentioned formula (1) based on the specific gravity and the blending ratio (part by mass) of each component was 0.40 in the base resin.

Further, vanadium acetylacetonate as a vanadium compound (D), a condensate of butyraldehyde and aniline as a condensate of an aldehyde and an amine (E), and acetone as a solvent of the vanadium compound (D) were charged into a stirrer, and the mixture was stirred at 20°C for five hours to prepare a primer. The charge ratio of each component is shown in Table 1.

(Example 2)

An adhesive corresponding to the second embodiment was prepared in Example 2. That is, polycarbonate-based urethane acrylate and 2-hydroxyethyl methacrylate as a polymerizable (meth)acrylic compound (A), cumene hydroperoxide as an organic peroxide (B), and particles of aluminum hydroxide as a thermally conductive filler (C) were charged into a planetary mixer, and the mixture was stirred at 20°C for 1 hour to prepare a first agent. The charge ratio of each component is shown in Table 1. The particles of aluminum hydroxide had an average particle size of 3 $\mu$m, and 100% by mass of particles of aluminum hydroxide, that is, all particles were subjected to hydrophobic surface treatment by a titanate coupling agent. The volume ratio $\alpha$ of the polymerizable (meth)acrylic compound (A) to the thermally conductive filler (C) determined by the above-mentioned formula (1) based on the specific gravity and the blending ratio (part by mass) of each component was 0.63 in the first agent.
Further, polycarbonate-based urethane acrylate and 2-hydroxyethyl methacrylate as a polymerizable (meth)acrylic compound (A), and vanadium acetylacetonate as a vanadium compound (D) were charged into a stirrer, and the mixture was stirred at 20°C for five hours to prepare a second agent. The charge ratio of each component is shown in Table 1. The volume ratio $\alpha$ of the polymerizable (meth)acrylic compound (A) to the thermally conductive filler (C) determined by the above-mentioned formula (1) based on the specific gravity and the blending ratio (part by mass) of each component was 0.45 in the adhesive, that is, a mixture of 510 parts by mass of the first agent and 102 parts by mass of the second agent.

(Example 3)

An adhesive corresponding to the first embodiment was prepared in Example 3. That is, polycarbonate-based urethane acrylate and 2-hydroxyethyl methacrylate as a polymerizable (meth)acrylic compound (A), cumene hydroperoxide as an organic peroxide (B), and particles of aluminum hydroxide as a thermally conductive filler (C) were charged into a planetary mixer, and the mixture was stirred at 20°C for one hour to prepare a base resin. The charge ratio of each component is shown in Table 1. The particles of aluminum hydroxide had an average particle size of 3 $\mu$m, and 100% by mass of particles of aluminum hydroxide, that is, all particles were subjected to hydrophobic surface treatment by stearic acid. The volume ratio $\alpha$ of the polymerizable (meth)acrylic compound (A) to the thermally conductive filler (C) determined by the above-mentioned formula (1) based on the specific gravity and the blending ratio (part by mass) of each component was 0.56 in the base resin. In addition, a primer was prepared in the same manner as in Example 1.

(Example 4)

An adhesive corresponding to the first embodiment was prepared in Example 4. That is, polycarbonate-based urethane acrylate and 2-hydroxyethyl methacrylate as a polymerizable (meth)acrylic compound (A), cumene hydroperoxide as an organic peroxide (B), and particles of aluminum hydroxide as a thermally conductive filler (C) were charged into a planetary mixer, and the mixture was stirred at 20°C for one hour to prepare a base resin. The charge ratio of each component is shown in Table 1. The particles of aluminum hydroxide had an average particle size of 3 $\mu$m, and 100% by mass of particles of aluminum hydroxide, that is, all particles were subjected to hydrophobic surface treatment by a titanate coupling agent. The volume ratio $\alpha$ of the polymerizable (meth)acrylic compound (A) to the thermally conductive filler (C) determined by the above-mentioned formula (1) based on the specific gravity and the blending ratio (part by mass) of each component was 0.63 in the base resin. In addition, a primer was prepared in the same manner as in Example 1.

(Example 5)

An adhesive corresponding to the first embodiment was prepared in Example 5. That is, polycarbonate-based urethane acrylate and 2-hydroxyethyl methacrylate as a polymerizable (meth)acrylic compound (A), cumene hydroperoxide as an organic peroxide (B), and particles of aluminum hydroxide as a thermally conductive filler (C) were charged into a planetary mixer, and the mixture was stirred at 20°C for one hour to prepare a base resin. The particles of hydroxide aluminum not subjected to hydrophobic surface treatment and the particles of hydroxide aluminum subjected to hydrophobic surface treatment by a titanate coupling agent were used as thermally conductive fillers (C). The charge ratio of each component is shown in Table 1. The particles of aluminum hydroxide had an average particle size of 3 $\mu$m. The ratio of the particles of hydroxide aluminum subjected to hydrophobic surface treatment was 40% by mass in the particles of aluminum hydroxide. The volume ratio $\alpha$ of the polymerizable (meth)acrylic compound (A) to the thermally conductive filler (C) determined by the above-mentioned formula (1) based on the specific gravity and the blending ratio (part by mass) of each component was 0.45 in the base resin. In addition, a primer was prepared in the same manner as in Example 1.

(Example 6)

An adhesive corresponding to the first embodiment was prepared in Example 6. That is, polycarbonate-based urethane acrylate and 2-hydroxyethyl methacrylate as a polymerizable (meth)acrylic compound (A), cumene hydroperoxide as an organic peroxide (B), and particles of aluminum hydroxide as a thermally conductive filler (C) were charged into a planetary mixer, and the mixture was stirred at 20˚C for one hour to prepare a base resin. The charge ratio of each component is shown in Table 1. The particles of aluminum hydroxide had an average particle size of 50 $\mu$m, and 100% by mass of particles of aluminum hydroxide, that is, all particles were subjected to hydrophobic surface treatment by a titanate coupling agent. The volume ratio $\alpha$ of the polymerizable (meth)acrylic compound (A) to the thermally conductive filler (C) determined by the above-mentioned formula (1) based on the specific gravity and the blending ratio (part by mass) of each component was 0.56 in the base resin. In addition, a primer was prepared in the same manner as in Example 1.

(Comparative Example 1)

An adhesive comprising a base resin and a primer was prepared in Comparative Example 1. That is, polycarbonate-based urethane acrylate and 2-hydroxyethyl methacrylate as a polymerizable (meth)acrylic compound (A), cumene hydroperoxide as an organic peroxide (B), and particles of aluminum hydroxide as a thermally conductive filler (C) were charged into a planetary mixer, and the mixture was stirred at 20˚C for one hour to prepare a base resin. The charge ratio of each component is shown in Table 2. The particles of aluminum hydroxide had an average particle size of 3 $\mu$m, and 100% by mass of particles of aluminum hydroxide, that is, all particles were subjected to hydrophobic surface treatment by a titanate coupling agent. The volume ratio $\alpha$ of the polymerizable (meth)acrylic compound (A) to the thermally conductive filler (C) determined by the above-mentioned formula (1) based on the specific gravity and the blending ratio (part by mass) of each component was 0.35 in the base resin. In addition, a primer was prepared in the same manner as in Example 1.

(Comparative Example 2)

An adhesive comprising a base resin and a primer was prepared in Comparative Example 2. That is, polycarbonate-based urethane acrylate and 2-hydroxyethyl methacrylate as a polymerizable (meth)acrylic compound (A), cumene hydroperoxide as an organic peroxide (B), and particles of aluminum hydroxide as a thermally conductive filler (C) were charged into a planetary mixer, and the mixture was stirred at 20˚C for one hour to prepare a base resin. The charge ratio of each component is shown in Table 2. The particles of aluminum hydroxide had an average particle size of 3 $\mu$m, and 100% by mass of particles of aluminum hydroxide, that is, all particles were subjected to hydrophobic surface treatment by a titanate coupling agent. The volume ratio $\alpha$ of the polymerizable (meth)acrylic compound (A) to the thermally conductive filler (C) determined by the above-mentioned formula (1) based on the specific gravity and the blending ratio (part by mass) of each component was 0.68 in the base resin. In addition, a primer was prepared in the same manner as in Example 1.

(Comparative Example 3)

An adhesive comprising a base resin and a primer was prepared in Comparative Example 3. That is, polycarbonate-based urethane acrylate and 2-hydroxyethyl methacrylate as a polymerizable (meth)acrylic compound (A), cumene hydroperoxide as an organic peroxide (B), and particles of aluminum hydroxide as a thermally conductive filler (C) were charged into a planetary mixer, and the mixture was stirred at 20˚C for one hour to prepare a base resin. The particles of hydroxide aluminum not subjected to hydrophobic surface treatment and the particles of hydroxide aluminum subjected to hydrophobic surface treatment by a titanate coupling agent were used as thermally conductive fillers (C). The charge ratio of each component is shown in Table 2. The particles of aluminum hydroxide had an average particle size of 3 $\mu$m. The ratio of the particles of hydroxide aluminum subjected to hydrophobic surface treatment was 30% by mass in the particles of aluminum hydroxide. The volume ratio $\alpha$ of the polymerizable (meth)acrylic compound (A) to the thermally conductive filler (C) determined by the above-mentioned formula (1) based on the specific gravity and the blending ratio (part by mass) of each component was 0.45 in the base resin. In addition, a primer was prepared in the same manner as in Example 1.

(Comparative Example 4)

An adhesive comprising a base resin and a primer was prepared in Comparative Example 4. That is, polycarbonate-based urethane acrylate and 2-hydroxyethyl methacrylate as a polymerizable (meth)acrylic compound (A), cumene hydroperoxide as an organic peroxide (B), and particles of aluminum hydroxide as a thermally conductive filler (C) were charged into a planetary mixer, and the mixture was stirred at 20°C for one hour to prepare a base resin. The charge ratio of each component is shown in Table 2. The particles of aluminum hydroxide had an average particle size of 50 μm, and 100% by mass of particles of aluminum hydroxide, that is, all particles were subjected to hydrophobic surface treatment by a titanate coupling agent. The volume ratio α of the polymerizable (meth)acrylic compound (A) to the thermally conductive filler (C) determined by the above-mentioned formula (1) based on the specific gravity and the blending ratio (part by mass) of each component was 0.35 in the base resin. In addition, a primer was prepared in the same manner as in Example 1.

(Comparative Example 5)

An adhesive comprising a base resin and a primer was prepared in Comparative Example 5. That is, polycarbonate-based urethane acrylate and 2-hydroxyethyl methacrylate as a polymerizable (meth)acrylic compound (A), cumene hydroperoxide as an organic peroxide (B), and particles of aluminum hydroxide as a thermally conductive filler (C) were charged into a planetary mixer, and the mixture was stirred at 20°C for one hour to prepare a base resin. The charge ratio of each component is shown in Table 2. The particles of aluminum hydroxide had an average particle size of 3 μm, and 100% by mass of particles of aluminum hydroxide, that is, all particles were subjected to hydrophobic surface treatment by stearic acid. The volume ratio α of the polymerizable (meth)acrylic compound (A) to the thermally conductive filler (C) determined by the above-mentioned formula (1) based on the specific gravity and the blending ratio (part by mass) of each component was 0.56 in the base resin.

Further, cobalt naphthenate, a condensate of butyraldehyde and aniline as a condensate of an aldehyde and an amine (E), and acetone as a solvent of cobalt naphthenate were charged into a stirrer, and the mixture was stirred at 20°C for five hours to prepare a primer. The charge ratio of each component is shown in Table 2.

Then, measurements and evaluations for the following items were performed for the adhesive of each Example and Comparative Example. The results are shown in Tables 1 and 2. In base resins and first agents in Tables 1 and 2, the value of the volume ratio α of a polymerizable (meth)acrylic compound (A) to a thermally conductive filler (C) determined by the above-mentioned formula (1) based on the specific gravity and the blending ratio (part by mass) of each component is indicated in the column "Volume ratio α in Base resin or First agent". In addition, in adhesives in Tables 1 and 2, the value of the volume ratio α of a polymerizable (meth)acrylic compound (A) to a thermally conductive filler (C) determined by the above-mentioned formula (1) based on the specific gravity and the blending ratio (part by mass) of each component is indicated in the column "Volume ratio α in Adhesive".

<Viscosity>

The viscosity was measured for the base resin or the first agent of each Example and Comparative Example using a Brookfield rotary viscometer. Measurement of the viscosity was performed at a number of revolutions of 10 rpm under an atmosphere of 20°C. The symbol "-" in the column "Viscosity" of Table 2 indicates that a base resin was not liquefied and the viscosity could not be measured.

<Separation Property>

Separation property of each component was evaluated for the base resin or the first agent of each Example and Comparative Example. That is, after the base resin or the first agent of each Example and Comparative Example was allowed to stand under an atmosphere of 20°C for ten days, the presence or absence of separation and precipitation of components was checked by visual observation. The symbol "○" in the column "Separation property" of each of Tables 1 and 2 indicates that separation and precipitation of components could not be observed, and the symbol "x" indicates that separation or precipitation of components was observed. The symbol "-" in the column "Viscosity" of Table 2 indicates that a base resin was not liquefied and the separation property could not be evaluated.

<Curability>

Curability was evaluated for the adhesive of each Example and Comparative Example based on the degree of curability for a predetermined period of time. That is, in each Example and Comparative Example except for Example 2, 10 parts by mass of a base resin was applied to one of polyethylene terephthalate (PET) films as a first adherend, and 1 part by mass of a primer was applied to the other of polyethylene terephthalate (PET) films as a second adherend, and thereafter the PET films were laminated to each other. In Example 2, 5 parts by mass of a first agent and 1 part by mass of a second agent were mixed with each other, and thereafter the mixture of the first agent and second agent was each applied to a pair of the PET films and the PET films were laminated to each other. Then, the laminated PET film was aged under an atmosphere of 20˚C for one hour, and then the degree of curing of the adhesive was evaluated. The symbol "○" in the column "Curability" of each of Tables 1 and 2 indicates that the adhesive was completely cured, and the symbol "x" indicates that an insufficient portion of curing was present. The symbol "-" in the column "Curability" of Table 2 indicates that a base resin was not liquefied and the curability could not be evaluated.

<Adhesive Strength>

Adhesive strength was measured for the adhesive of each Example and Comparative Example in accordance with JIS K6850 of Japanese Industrial Standard (International Standard ISO4587). A plurality of aluminum plates (25 mm in length, 100 mm in width and 1.5 mm in thickness) were used as adherends and an adhesive surface with 25 mm in length and 12.5 mm in width was provided on the surface of each of the aluminum plates. In each Example and Comparative Example except for Example 2, 10 parts by mass of a base resin was applied to one of the aluminum plates as a first adherend, and 1 part by mass of a primer was applied to the other of the aluminum plates as a second adherend, and thereafter the aluminum plates were laminated to each other. In Example 2, 5 parts by mass of a first agent and 1 part by mass of a second agent were mixed with each other, and thereafter the mixture of first agent and second agent was each applied to one of a pair of the aluminum plates, and the aluminum plates were laminated to each other. Then, the laminated aluminum plate was aged under an atmosphere of 20˚C for twenty-four hours, and then the adhesive strength was measured at a tensile speed of 50 mm/min. The symbol "> 8" in the column "Adhesive strength" of each of Tables 1 and 2 indicates that the value of adhesive strength exceeds 8 N/mm$^2$. In addition, the symbol "-" in the column "Adhesive strength" of Table 2 indicates that a base resin was not liquefied and the adhesive strength could not be measured.

<Thermal Resistance>

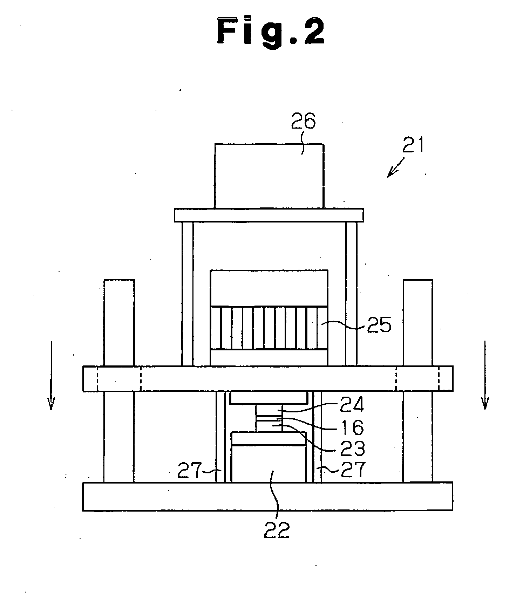

Thermal resistance was measured for an adhesive layer composed of the adhesive of each Example and Comparative Example using a thermal resistance measuring device in accordance with ASTM D5470, which is a standard of American Society for Testing and Materials. As shown in Fig. 2, a thermal resistance measuring device 21 includes a copper block 23 placed on a heat insulator 22 and a copper block 24 positioned above the copper block 23. Each of the copper blocks 23, 24 has a cross-sectional area of 1 cm$^2$. A heater having a heating value of 25 W is built in the copper block 23 and a heat sink 25 with a fan connected to the copper block 24.

In each Example and Comparative Example except for Example 2, 10 parts by mass of a base resin discharged onto the copper block 23, and 1 part by mass of a primer was applied onto the copper block 24. Next, volatile components were completely volatized from the primer, and thereafter the copper blocks 23, 24 were joined to each other. In Example 2, 5 parts by mass of a first agent and 1 part by mass of a second agent were mixed with each other, and thereafter the mixture of the first agent and second agent was applied onto the copper block 23 and the copper blocks 23, 24 were joined to each other. Then, an adhesive was cured under the following two conditions to form an adhesive layer 16.

Condition I: A weight 26 having a load of 4 Kg is seated on the thermal resistance measuring device 21, and the copper block 24 is pressed toward the copper block 23 as shown by the arrow of Fig. 2.
Condition II: A weight 26 having a load of 4 Kg is seated on the thermal resistance measuring device 21, and a stopper 27 is mounted on the thermal resistance measuring device 21 to adjust the thickness of the adhesive layer 16 to 100 μm.

Subsequently, the heater was heated in a state where a load is applied to the copper block 24, and the temperature of each of the copper blocks 23, 24 was measured at the time point when the temperature becomes constant, and the thermal resistance of the adhesive layer 16 was calculated from the following formula (2).

$$\text{Thermal resistance} = (\theta j1 - \theta j0)/\text{Heating value Q} \ ... \ (2)$$

In the above-mentioned formula (2), θj1 indicates the temperature of the copper block 23, θj0 indicates the temperature of the copper block 24, and the heating value Q is 25 W. The symbol "-" in the column "Thermal resistance" of Table 2 indicates that a base resin was not liquefied and the thermal resistance could not be measured.

Table 1

| | | Examples | | | | | |
|---|---|---|---|---|---|---|---|
| | | 1 | 2 | 3 | 4 | 5 | 6 |
| <Base resin or First agent> | | | | | | | |
| (A) Polycarbonate-based urethane acrylate (part by mass) | | 30 | 30 | 30 | 30 | 30 | 30 |
| (A) 2-Hydroxyethyl methacrylate (part by mass) | | 70 | 70 | 70 | 70 | 70 | 70 |
| (B) Cumene hydroperoxide (part by mass) | | 5 | 10 | 5 | 5 | 5 | 5 |
| (C) Particles of aluminum oxide | Untreated particles (average particle size: 3 $\mu$m, part by mass) | - | - | - | - | 120 | - |
| | Particles subjected to hydrophobic surface treatment by titanate coupling agent (average particle size: 3 $\mu$m, part by mass) | 160 | 400 | - | 400 | 80 | - |
| | Particles subjected to hydrophobic surface treatment by stearic acid (average particle size: 3 $\mu$m, part by mass) | - | - | 300 | - | - | - |
| | Particles subjected to hydrophobic surface treatment by titanate coupling agent (average particle size: 50 $\mu$m, part by mass) | - | - | - | - | - | 300 |
| | Ratio of particles subjected to hydrophobic surface treatment (% by mass) | 100 | 100 | 100 | 100 | 40 | 100 |
| Volume ratio $\alpha$ in base resin or First agent | | 0.40 | 0.63 | 0.56 | 0.63 | 0.45 | 0.56 |
| Viscosity ($\times$ 10$^3$ mPa·s) | | 18 | 1000 | 100 | 1000 | 5 | 16 |
| Separation property | | ○ | ○ | ○ | ○ | ○ | ○ |
| <Primer or Second agent> | | | | | | | |
| (A) Polycarbonate-based urethane acrylate (part by mass) | | - | 30 | - | - | - | - |
| (A) 2-Hydroxyethyl methacrylate (part by mass) | | - | 70 | - | - | - | - |
| (D) Vanadium acetylacetonate (part by mass) | | 5 | 2 | 5 | 5 | 5 | 5 |
| (E) Condensate of butyraldehyde and aniline (part by mass) | | 100 | - | 100 | 100 | 100 | 100 |
| Acetone (part by mass) | | 200 | - | 200 | 200 | 200 | 200 |
| <Adhesive> | | | | | | | |
| Volume ratio $\alpha$ in adhesive | | 0.40 | 0.45 | 0.56 | 0.63 | 0.45 | 0.56 |
| Curability | | ○ | ○ | ○ | ○ | ○ | ○ |
| Adhesive strength (N/mm$^2$) | | >8 | >8 | >8 | >8 | >8 | >8 |

(continued)

| <Adhesive> | | | | | | | | | |
|---|---|---|---|---|---|---|---|---|---|
| Thermal resistance | Condition I | Thickness of Sample when measuring thermal resistance (μm) | 11 | 12 | 18 | 59 | 13 | 100 |
| | | Thermal resistance (˚C/W) | 0.23 | 0.20 | 0.20 | 0.36 | 0.20 | 0.69 |
| | Condition II | Thickness of Sample when measuring thermal resistance (μm) | 100 | 100 | 100 | 100 | 100 | 100 |
| | | Thermal resistance (˚C/W) | 0.87 | 0.81 | 0.65 | 0.60 | 0.82 | 0.69 |

Table 2

| | | Comparative Examples | | | | |
|---|---|---|---|---|---|---|
| | | 1 | 2 | 3 | 4 | 5 |
| <Base resin> | | | | | | |
| (A) Polycarbonate-based urethane acrylate (part by mass) | | 30 | 30 | 30 | 30 | 30 |
| (A) 2-Hydroxyethyl methacrylate (part by mass) | | 70 | 70 | 70 | 70 | 70 |
| (B) Cumene hydroperoxide (part by mass) | | 5 | 5 | 5 | 5 | 5 |
| (C) Particles of aluminum oxide | Untreated particles (average particle size: 3 $\mu$m, part by mass) | - | - | 140 | - | - |
| | Particles subjected to hydrophobic surface treatment by titanate coupling agent (average particle size: 3 $\mu$m, part by mass) | 130 | 500 | 60 | - | - |
| | Particles subjected to hydrophobic surface treatment by stearic acid (average particle size: 3 $\mu$m, part by mass) | - | - | - | - | 300 |
| | Particles subjected to hydrophobic surface treatment by titanate coupling agent (average particle size: 50 $\mu$m, part by mass) | - | - | - | 130 | - |
| | Ratio of particles subjected to hydrophobic surface treatment (% by mass) | 100 | 100 | 30 | 100 | 100 |
| Volume ratio $\alpha$ in base material | | 0.35 | 0.68 | 0.45 | 0.35 | 0.56 |
| Viscosity ($\times 10^3$ mPa·s) | | 10 | - | 6 | 1 | 100 |
| Separation property | | ○ | - | × | ○ | ○ |
| <Primer> | | | | | | |
| (D) Vanadium acetylacetonate (part by mass) | | 5 | 5 | 5 | 5 | - |
| Cobalt naphthenate (part by mass) | | - | - | - | - | 5 |
| (E) Condensate of butyraldehyde and aniline (part by mass) | | 100 | 100 | 100 | 100 | 100 |
| Acetone (part by mass) | | 200 | 200 | 200 | 200 | 200 |
| <Adhesive> | | | | | | |
| Volume ratio $\alpha$ in adhesive | | 0.35 | 0.68 | 0.45 | 0.35 | 0.56 |
| Curability | | ○ | - | ○ | ○ | × |
| Adhesive strength (N/mm$^2$) | | > 8 | - | >8 | >8 | 3.7 |

14

(continued)

| <Adhesive> | | | | | | | |
|---|---|---|---|---|---|---|---|
| Thermal resistance | Condition I | | | | | | |
| | Thickness of Sample when measuring thermal resistance ($\mu$m) | 11 | - | 11 | 98 | 19 |
| | Thermal resistance (˚C/W) | 0.26 | | 0.21 | 0.99 | 0.21 |
| | Condition II | | | | | | |
| | Thickness of Sample when measuring thermal resistance ($\mu$m) | 100 | - | 100 | 100 | 100 |
| | Thermal resistance (˚C/W) | 1.01 | | 0.80 | 1.02 | 0.68 |

As shown in Fig. 1, excellent evaluations and results for each item were obtained in the adhesive according to each Example. Therefore, the adhesive of each Example had good workability and was rapidly cured even at normal temperature, and an adhesive layer 16 composed of the adhesive had high thermal conductivity. Further, it was found from measurement results of thermal resistance in the condition I that the adhesives according to Examples 1 to 5 were easily compressed to form a thin adhesive layer 16 as compared with the adhesive according to Example 6. The volume ratio $\alpha$ in the adhesive in Example 6 was large as compared with Comparative Example 4 in which particles of aluminum hydroxide having the same average particle size are used, and therefore excellent results for thermal resistance in the condition I were obtained as compared with Comparative Example 4.

On the other hand, since the value of a volume ratio $\alpha$ is less than 0.40 in the adhesives according to Comparative Example 1 and Comparative Example 4 as shown in Table 2, the thermal resistance in the case where the adhesive layer 16 has a thickness of 100 $\mu$m was high, and thus the thermal conductivity was low. Since the value of the volume ratio $\alpha$ exceeds 0.65 in the adhesives according to Comparative Example 2, the base resin was not liquefied, and thus the adhesive could not be used as an adhesive. Since the ratio of a thermally conductive filler subjected to hydrophobic surface treatment was less than 40% by mass, the dispersion stability of each component was low in comparative Example 3. Since a primer did not contain a vanadium compound (D) in the adhesive according to Comparative Example 5, the curability of the adhesive was low and the adhesive strength was also low.

Therefore, the present examples and embodiments are to be considered as illustrative and not restrictive and the invention is not to be limited to the details given herein, but may be modified within the scope and equivalence of the appended claims.

## Claims

1. A thermally conductive adhesive composition, **characterized by**:

   (A) a polymerizable (meth)acrylic compound comprising at least one of a (meth)acrylic monomer and a (meth)acrylic oligomer;
   (B) an organic peroxide;
   (C) a thermally conductive filler; and
   (D) a vanadium compound,

   wherein the volume ratio $\alpha$ of the polymerizable (meth)acrylic compound (A) to the thermally conductive filler (C) determined by the following formula (1) is 0.40 to 0.65:

$$\text{Volume ratio } \alpha = \text{Volume of Thermally conductive filler (C)/(Volume of}$$
$$\text{Polymerizable (meth)acrylic compound (A) + Volume of Thermally conductive filler}$$
$$\text{(C)) ... (1)}$$

   wherein 40 to 100% by mass of the thermally conductive filler (C) is subjected to hydrophobic surface treatment.

2. The thermally conductive adhesive composition according to claim 1, **characterized in that** hydrophobic surface treatment subjected to the thermally conductive filler (C) is surface treatment by stearic acid or a titanate coupling agent.

3.  The thermally conductive adhesive composition according to claim 1 or 2, **characterized in that** the thermally conductive adhesive composition contains a hydroperoxide as the organic peroxide (B).

4.  The thermally conductive adhesive composition according to claim 3, **characterized in that** the thermally conductive adhesive composition contains cumene hydroperoxide as a hydroperoxide.

5.  The thermally conductive adhesive composition according to any one of claims 1 to 4, **characterized in that** the content of the organic peroxide (B) in the thermally conductive adhesive composition is 5 to 10 parts by mass based on 100 parts by mass of the polymerizable (meth)acrylic compound (A) comprising at least one of a (meth)acrylic monomer and a (meth)acrylic oligomer.

6.  The thermally conductive adhesive composition according to any one of claims 1 to 5, **characterized in that** the thermally conductive filler (C) has a particulate form and the thermally conductive filler (C) having a particulate form has an average particle size of 0.2 to 10 $\mu$m.

7.  The thermally conductive adhesive composition according to any one of claims 1 to 6, **characterized in that** the thermally conductive adhesive composition further contains (E) a condensate of an aldehyde and an amine, and the composition comprises:

    a base resin containing the polymerizable (meth)acrylic compound (A), the organic peroxide (B), and the thermally conductive filler (C); and
    a primer containing the vanadium compound (D) and the condensate of an aldehyde and an amine (E).

8.  The thermally conductive adhesive composition according to claim 7, **characterized in that** the content of the condensate of an aldehyde and an amine (E) in the thermally conductive adhesive composition is 50 to 200 parts by mass based on 5 parts by mass of the vanadium compound (D).

9.  The thermally conductive adhesive composition according to any one of claims 1 to 6, **characterized in that** the thermally conductive adhesive composition comprises a first agent and a second agent, and
    wherein both of the first agent and the second agent each contain the polymerizable (meth)acrylic compound (A), and only one of the first agent and the second agent further contains the organic peroxide (B), and only the other of the first agent and the second agent contains the vanadium compound (D).

10. A method for adhering a first adherend and a second adherend to each other using the thermally conductive adhesive composition according to claim 7 or 8, the method **characterized by**:

    applying the base resin to the first adherend;
    applying the primer to the second adherend; and
    joining the first adherend and the second adherend to each other so that the base resin and the primer contact each other on the joined interface to thereby adhere the first adherend and the second adherend to each other.

11. The method for adhering a first adherend and a second adherend to each other using the thermally conductive adhesive composition according to claim 9, the method **characterized by**:

    mixing the first agent and the second agent;
    applying the mixture of the first agent and the second agent to at least one of the first adherend and the second adherend; and
    joining the first adherend and the second adherend to each other so that the mixture of the first agent and the second agent is present on the joined interface to thereby adhere the first adherend and the second adherend to each other.

**Patentansprüche**

1.  Eine thermisch leitfähige Klebstoffzusammensetzung, **gekennzeichnet durch**:

(A) eine polymerisierbare (Meth)acrylverbindung umfassend mindestens eine Verbindung von einem (Meth)acrylmonomer und einem (Meth)acryloligomer;
(B) ein organisches Peroxid;
(C) einen thermisch leitfähigen Füllstoff; und
(D) eine Vanadiumverbindung,

wobei das Volumenverhältnis $\alpha$ der polymerisierbaren (Meth)acrylverbindung (A) zu dem thermisch leitfähigen Füllstoff (C), bestimmt **durch** die folgende Formel (1), von 0,40 bis 0,65 beträgt:

$$\text{Volumenverhältnis } \alpha = \text{Volumen des thermisch leitfähigen Füllstoffs (C)}/(\text{Volumen der polymerisierbaren (Meth)acrylverbindung (A)} + \text{Volumen des thermisch leitfähigen Füllstoffs (C))} \dots (1),$$

wobei 40 bis 100 Masse-% des thermisch leitfähigen Füllstoffs (C) einer hydrophoben Oberflächenbehandlung unterzogen werden.

2. Die thermisch leitfähige Klebstoffzusammensetzung nach Anspruch 1, **dadurch gekennzeichnet, dass** die hydrophobe Oberflächenbehandlung, welcher der thermisch leitfähige Füllstoff (C) unterzogen wird, eine Oberflächenbehandlung durch Stearinsäure oder ein Titanat-Kupplungsmittel ist.

3. Die thermisch leitfähige Klebstoffzusammensetzung nach Anspruch 1 oder 2, **dadurch gekennzeichnet, dass** die thermisch leitfähige Klebstoffzusammensetzung ein Hydroperoxid als organisches Peroxid (B) enthält.

4. Die thermisch leitfähige Klebstoffzusammensetzung nach Anspruch 3, **dadurch gekennzeichnet, dass** die thermisch leitfähige Klebstoffzusammensetzung ein Cumolhydroperoxid als Hydroperoxid enthält.

5. Die thermisch leitfähige Klebstoffzusammensetzung nach einem der Ansprüche 1 bis 4, **dadurch gekennzeichnet, dass** der Gehalt an organischem Peroxid (B) in der thermisch leitfähigen Klebstoffzusammensetzung 5 bis 10 Massenanteile basierend auf 100 Massenanteilen der polymerisierbaren (Meth)acrylverbindung (A) umfassend mindestens eine Verbindung von einem (Meth)acrylmonomer und einem (Meth)acryloligomer beträgt.

6. Die thermisch leitfähige Klebstoffzusammensetzung nach einem der Ansprüche 1 bis 5, **dadurch gekennzeichnet, dass** der thermisch leitfähige Füllstoff (C) in Teilchenform vorliegt und der thermisch leitfähige Füllstoff (C), der eine Teilchenform hat, eine durchschnittliche Partikelgröße von 0,2 bis 10 $\mu$m hat.

7. Die thermisch leitfähige Klebstoffzusammensetzung nach einem der Ansprüche 1 bis 6, **dadurch gekennzeichnet, dass** die thermisch leitfähige Klebstoffzusammensetzung zusätzlich (E) ein Kondensat von einem Aldehyd und einem Amin enthält, und die Zusammensetzung umfasst:

ein Basisharz enthaltend die polymerisierbare (Meth)acrylverbindung (A), das organische Peroxid (B), und den thermisch leitfähigen Füllstoff (C); und
einen Primer enthaltend die Vanadiumverbindung (D) und das Kondensat von einem Aldehyd und einem Amin (E).

8. Die thermisch leitfähige Klebstoffzusammensetzung nach Anspruch 7, **dadurch gekennzeichnet, dass** der Gehalt des Kondensats von einem Aldehyd und einem Amin (E) in der thermisch leitfähigen Klebstoffzusammensetzung 50 bis 200 Massenanteile basierend auf 5 Massenanteilen der Vanadiumverbindung (D) beträgt.

9. Die thermisch leitfähige Klebstoffzusammensetzung nach einem der Ansprüche 1 bis 6, **dadurch gekennzeichnet, dass** die thermisch leitfähige Klebstoffzusammensetzung ein erstes Mittel und ein zweites Mittel umfasst, und wobei beide, das erste Mittel und das zweite Mittel, jeweils die polymerisierbare (Meth)acrylverbindung (A) enthalten, und nur eines von dem ersten Mittel und dem zweiten Mittel zusätzlich das organische Peroxid (B) enthält, und nur das andere von dem ersten Mittel und dem zweiten Mittel die Vanadiumverbindung (D) enthält.

10. Verfahren zum Anhaften einer ersten Klebefläche und einer zweiten Klebefläche aneinander unter Verwendung der thermisch leitfähigen Klebstoffzusammensetzung nach Anspruch 7 oder 8, wobei das Verfahren **gekennzeichnet ist durch**:

Aufbringen des Basisharzes auf die erste Klebefläche;
Aufbringen des Primers auf die zweite Klebefläche; und
Verbinden der ersten Klebefläche und der zweiten Klebefläche miteinander, so dass das Basisharz und der Primer an der Verbindungsfläche in Kontakt treten, um **dadurch** die erste Klebefläche und die zweite Klebefläche aneinander zu haften.

**11.** Verfahren zum Anhaften einer ersten Klebefläche und einer zweiten Klebefläche aneinander unter Verwendung der thermisch leitfähigen Klebstoffzusammensetzung nach Anspruch 9, wobei das Verfahren **gekennzeichnet ist durch**:

Mischen des ersten Mittels und des zweiten Mittels;
Aufbringen des Gemisches des ersten Mittels und des zweiten Mittels auf mindestens eine von der ersten Klebefläche und der zweiten Klebefläche; und
Zusammenbringen der ersten Klebefläche und der zweiten Klebefläche aneinander, so dass das Gemisch des ersten Mittels und des zweiten Mittels auf der Verbindungsfläche vorhanden ist, um **dadurch** die erste Klebefläche und die zweite Klebefläche aneinander zu haften.

### Revendications

**1.** Composition adhésive thermoconductrice, **caractérisée par** :

(A) un composé (méth)acrylique polymérisable comportant au moins l'un d'un monomère (méth)acrylique et d'un oligomère (méth)acrylique ;
(B) un peroxyde organique ;
(C) une charge thermoconductrice ; et
(D) un composé de vanadium,

le rapport de volume $\alpha$ du composé (méth)acrylique polymérisable (A) à la charge thermoconductrice (C) déterminé par la formule suivante (1) étant de

$$\text{rapport de volume } \alpha = \text{volume de charge thermoconductrice (C)/(volume de composé}$$
$$\text{(méth)acrylique polymérisable (A)} + \text{volume de charge thermoconductrice (C)) ... (1),}$$

0,40 à 0,65 :
40 à 100% en masse de la charge thermoconductrice (C) étant soumis à un traitement de surface hydrophobe.

**2.** La composition adhésive thermoconductrice selon la revendication 1, **caractérisée en ce que** le traitement de surface hydrophobe auquel est soumis la charge thermoconductrice (C) est un traitement de surface à l'acide stéarique ou un agent de liaison à titanate.

**3.** La composition adhésive thermoconductrice selon la revendication 1 ou 2, **caractérisée en ce que** la composition adhésive thermoconductrice contient un hydroperoxyde comme peroxyde organique (B).

**4.** La composition adhésive thermoconductrice selon la revendication 3, **caractérisée en ce que** la composition adhésive thermoconductrice contient de l'hydroperoxyde de cumène comme hydroperoxyde.

**5.** La composition adhésive thermoconductrice selon l'une quelconque des revendications 1 à 4, **caractérisée en ce que** la teneur en peroxyde organique (B) de la composition adhésive thermoconductrice est de 5 à 10 parties en masse sur 100 parties en masse du composé (méth)acrylique polymérisable (A) comportant au moins l'un d'un monomère (méth)acrylique et d'un oligomère (méth)acrylique.

**6.** La composition adhésive thermoconductrice selon l'une quelconque des revendications 1 à 5, **caractérisée en ce**

**que** la charge thermoconductrice (C) a une forme particulaire et la charge thermoconductrice (C) ayant une forme particulaire a une taille de particule moyenne de 0,2 à 10 µm.

7. La composition adhésive thermoconductrice selon l'une quelconque des revendications 1 à 6, **caractérisée en ce que** la composition adhésive thermoconductrice contient en outre (E) un condensat d'un aldéhyde et d'une amine, et la composition comprenant :

   une résine de base contenant le composé (méth)acrylique polymérisable (A), le peroxyde organique (B) et la charge thermoconductrice (C) ; et
   un primaire contenant le composé de vanadium (D) et le condensat d'un aldéhyde et d'une amine (E).

8. La composition adhésive thermoconductrice selon la revendication 7, **caractérisée en ce que** la teneur en condensat d'un aldéhyde et d'une amine (E) de la composition adhésive thermoconductrice est de 50 à 200 parties en masse sur 5 parties en masse du composé de vanadium (D).

9. La composition adhésive thermoconductrice selon l'une quelconque des revendications 1 à 6, **caractérisée en ce que** la composition adhésive thermoconductrice comprend un premier agent et un deuxième agent, et où les deux du premier agent et du deuxième agent contiennent chacun le composé (méth)acrylique polymérisable (A), et seul l'un du premier agent et du deuxième agent contient en outre le peroxyde organique (B), et seul l'autre du premier agent et du deuxième agent contient le composé de vanadium (D).

10. Procédé de collage d'un premier élément à coller et d'un deuxième élément à coller l'un avec l'autre moyennant la composition adhésive thermoconductrice selon la revendication 7 ou 8, le procédé étant **caractérisé par** :

    l'application de la résine de base sur le premier élément à coller ;
    l'application du primaire sur le deuxième élément à coller ; et
    l'assemblage du premier élément à coller et du deuxième élément à coller l'un avec l'autre de sorte que la résine de base et le primaire soient en contact l'un avec l'autre sur l'interface assemblée de façon à coller le premier élément à coller et le deuxième élément à coller l'un avec l'autre.

11. Le procédé de collage d'un premier élément à coller et d'un deuxième élément à coller l'un avec l'autre moyennant la composition adhésive thermoconductrice selon la revendication 9, le procédé étant **caractérisé par** :

    le mélange du premier agent et du deuxième agent ;
    l'application du mélange du premier agent et du deuxième agent sur au moins l'un du premier élément à coller et du deuxième élément à coller ; et
    l'assemblage du premier élément à coller et du deuxième élément à coller l'un avec l'autre de sorte que le mélange du premier agent et du deuxième agent soit présent sur l'interface assemblée de façon à coller le premier élément à coller et le deuxième élément à coller l'un avec l'autre.

# Fig.1A

# Fig.1B

# Fig.1C

# Fig.1D

# Fig.2

**REFERENCES CITED IN THE DESCRIPTION**

**Patent documents cited in the description**

- JP 9132761 A
- JP 9132760 A
- JP 9053051 A
- JP 6080937 A
- JP 5125331 A